# EUROPÄISCHE PATENTSCHRIFT

(11) **EP 2 958 651 B1**
(45) Veröffentlichungstag und Bekanntmachung des Hinweises auf die Patenterteilung: **11.10.2017**
(21) Anmeldenummer: 14705322.7
(22) Anmeldetag: 14.02.2014
(51) Int. Cl.: B01D 21/00, B01D 21/24, C02F 1/00, C02F 103/44

(54) **LAMELLENKLÄRER**
LAMELLA CLARIFIER
CLARIFICATEUR À TÔLES INCLINÉES

(30) Priorität: 25.02.2013 DE 102013101848
(43) Veröffentlichungstag der Anmeldung: 30.12.2015
(73) Patentinhaber: Faritec GmbH & Co. KG, 55129 Mainz (DE)
(72) Erfinder: FARIWAR, Sasan Ahmad, 65193 Wiesbaden (DE)
(74) Vertreter: WSL Patentanwälte Partnerschaft mbB
(86) Internationale Anmeldenummer: PCT/EP2014/052868
(87) Internationale Veröffentlichungsnummer: WO 2014/128052

(56) Entgegenhaltungen:
- EP-A2- 1 270 055
- DE-A1- 4 231 790
- DE-A1- 19 651 369
- DE-U1- 29 615 452

## Beschreibung

Die vorliegende Erfindung betrifft einen Lamellenklärer, welcher einen Sedimentationsbehälter, mit einem Schmutzwasserzulauf und einem Klarwasserablauf, und mindestens eine erste Absetzplatte aufweist.

Zur Klärung von Abwässern aus der Industrie, aber auch von Dienstleistungsunternehmen, wie insbesondere Kfz-Betrieben mit Reinigungs- und Wartungsbereich, SB-Waschanlagen, Fuhrunternehmen, Betrieben zur Instandhaltung und Wartung von Fahrzeugen, Waschstrassen, Luft-und Wasserfahrzeuge, land- und forstwirtschaftliche Betriebe und Instandhaltungsbetriebe, wie sie auch im Anhang 49 der Abwasserverordnung aufgeführt sind, müssen diverse Schadstofftypen aus dem Schmutzwasser entfernt werden. Dazu zählen vor allem Schmutzwasser bei denen in Teilströmen mit regelmäßigen Anfall von mineralölhaltigen Abfall zu rechnen ist. In dem Schmutzwasser können auch Feststoffe, organisches Material und flüssige oder lösliche anorganische Verunreinigungen enthalten sein, wie beispielsweise Tenside, Reinigungsmittel und Pflegewachse. Die Verunreinigungen können als Festkörper, Schwebeteilchen oder gelöst in dem Schmutzwasser enthalten sein. Festkörper und Schwebeteilchen können zu einem Großteil durch Sedimentation aus dem Abwasser entfernt werden. Aufschwimmende Schmutzpartikel sammeln sich hingegen auf oder knapp unterhalb der Oberfläche des Schmutzwassers.

Um Schwebeteilchen und Festkörper aus dem Schmutzwasser zu entfernen, werden bei vorbekannten Lamellenklärern möglichst viele Absetzplatten in dem Sedimentationsbehälter angeordnet. Die Schmutzwasserzuleitung erfolgt dabei in unmittelbarer Nähe der Absetzplatten, sodass das in den Sedimentationsbehälter einströmende Schmutzwasser direkt zu den Absetzplatten gelangen und bereits am Boden des Sedimentationsbehälters gesammeltes Sediment aufwirbeln und mitreißen kann. Dadurch ist die Klärung des Schmutzwassers unzureichend. Werden lediglich weniger Absetzplatten in dem Sedimentationsbehälter angeordnet, ist die Klärung ebenfalls unzureichend, da das Schmutzwasser bzw. die darin enthaltenden Schwebstoffe nicht ausreichend mit den Absetzplatten in Kontakt kommen.

Das deutsche Gebrauchsmuster DE 296 15 452 U1 betrifft eine Vorrichtung zum Reinigen von Abwässern mit Wabenelementen, wobei in einem Bioreaktor ein Plattenabscheider mit einer Vielzahl von schräggestellten Platten angeordnet ist.

Die deutsche Offenlegungsschrift DE 42 31 790 A1 betrifft eine Vorrichtung zum Aufbereiten von Abwässern mit einem Abwassersammelbehälter und mit mindestens einer Zuleitung zu und mindestens einer Abflussteitung von dem Behälter. Die Vorrichtung weist eine Vielzahl von geneigten Lamellen auf, die in oder hinter einem Abwassersammelbehälter angeordnet sind. Über eine an der Unterkante der Lamellen angeordnete Abwasserzuführung wird Schmutzwasser zugeleitet, wobei das Wasser am oberen Ende der Lamellen gereinigt ablaufen kann.

Die deutsche Offenlegungsschrift DE 196 51 369 A1 betrifft eine Fahrzeugreifenwaschanlage mit kontinuierlicher Wasseraufbereitung. In einem Sammelbecken wird das Schmutzwasser über eine Beruhigungsstrecke in einen Lamellenklärer geführt. Überlaufendes Abwasser wird in einem Frischwassertank gespeichert.

Die europäische Patentanmeldung EP 1 270 055 A2 betrifft einen Schlamm- und Ölabscheider für Abwasser mit einem einen Schlammfang bildenden Absetzraum für über einen Abwasserzulauf zugeführtes Abwasser, mit einer an eine Ölabscheidekammer angeschlossenen Plattenabscheideeinrichtung, die aus einem geneigten, in Strömungsrichtung ansteigenden Strömungskanal mit mehreren in einem gegenseitigen Abstand nebeneinandergereihten, strömungsparallelen Abscheideplatten besteht, und mit einem Ablauf für in der Ölabscheidekammer vom Öl getrenntes Abwasser. Die Ölabscheidekammer bildet einen oberhalb des Schlammfanges angeordneten Einsatz des Absetzraumes, wobei zwischen dem Absetzraum und der Ölabscheidekammer die Plattenabscheideeinrichtung angeordnet ist und der Ablauf mit einem Bodenbereich der Ölabscheidekammer in Strömungsverbindung steht.

Demgegenüber ist es Aufgabe der vorliegenden Erfindung einen Lamellenklärer mit verbesserten Sedimentationseigenschaften bereitzustellen.

Die vorliegende Aufgabe wird mit einem Lamellenklärer mit den eingangs genannten Merkmalen dadurch gelöst, dass eine Trennwand in einer Draufsicht von oben derart in dem Sedimentationsbehälter angeordnet ist, dass der Innenraum des Sedimentationsbehälters in einen ersten, den Schmutzwasserzulauf umfassenden Bereich und einen zweiten, den Klarwasserablauf und die Absetzplatte aufweisenden Bereich unterteilt ist, wobei der erste und zweite Bereich bodenseitig für den Durchtritt von Schmutzwasser miteinander verbunden sind und die Absetzplatte sich quer durch den zweiten Bereich mit einer positiven Steigung in Richtung des Klarwasserablaufs erstreckt, wobei die Trennwand einen Hauptabschnitt und zwei Flügelabschnitte aufweist, wobei jeder Flügelabschnitt mit dem Hauptabschnitt in einer Draufsicht von oben einen Winkel einschließt, der gemessen auf der Seite des ersten Bereichs < 180°, vorzugsweise 178°, groß ist. Durch die Anordnung der Trennwand gelangt das durch den Schmutzwasserzulauf einströmende Schmutzwasser zunächst in den ersten Bereich des Sedimentationsbehälters. In dem ersten Bereich wird die Geschwindigkeit des einströmenden Schmutzwassers reduziert, wobei die in dem Schmutzwasser entstehenden Turbulenzen durch die vorhandene Trennwand weitestgehend auf den ersten Bereich des Sedimentationsbehälters beschränkt werden. Das Aufwirbeln und Mitreißen von bereits auf dem Boden des Sedimentationsbehälters abgesetzten Sediment und der direkte Zugang des Schmutzwassers zu den Absetzplatten werden so verhindert.

Nachdem die Strömungsgeschwindigkeit des Schmutzwassers in dem ersten Bereich des Sedimentationsbehälters reduziert wurde, fließt es durch die bodenseitige Verbindung in den zweiten Bereich des Sedimentationsbehälters. Weil das Schmutzwasser nur durch die bodenseitige Verbindung in den zweiten Bereich fließen kann, gelangen nur wenige aufschwimmende Verunreinigungen in den zweiten Bereich. Die sich auf oder unterhalb der Oberfläche des Schmutzwassers in dem ersten Bereich des Sedimentationsbehälters ansammelnden, aufschwimmenden Verunreinigungen, können leicht entfernt und von einem Fachunternehmen entsorgt werden. Beispielsweise können die aufschwimmenden Verunreinigungen von Zeit zu Zeit abgeschöpft werden oder sie fließen durch einen Überlauf in einen separaten Auffangbehälter. Die bodenseitige Verbindung des ersten und zweiten Bereichs sollte einen möglichst großen Durchtrittsquerschnitt aufweisen und sich vorzugsweise über die gesamte Breite der Trennwand erstrecken.

In dem zweiten Bereich ist die mindestens eine erste Absetzplatte angeordnet. Die Absetzplatte hat eine positive Steigung in Richtung des Klarwasserablaufs, sodass das bodenseitig in den zweiten Bereich einströmende Schmutzwasser dem Füllstandspegel entsprechend über die geneigte Absetzplatte in Richtung des Klarwasserablaufs fließt. Es versteht sich, dass der Füllstandspegel von dem Volumen des Sedimentationsbehälters, der Menge des einströmenden Schmutzwassers und der Menge des ausströmenden Klarwassers abhängt. Die Menge des einströmenden Schmutzwassers und/oder die Menge des ausströmenden Klarwassers kann durch das Vorsehen und Einstellen von Ventilen in den entsprechenden Zu- und Abführleitungen gesteuert werden.

Weil das Schmutzwasser weitestgehend wirbelfrei in den zweiten Bereich und über die Absetzplatte fließt, setzen sich Schwebeteilchen und Festkörper auf der geneigten Absetzplatte ab. Auf der Absetzplatte abgesetztes Sediment rutscht aufgrund der Neigung der Absetzplatte in Richtung Boden des Sedimentationsbehälters, wo es gesammelt und von Zeit zu Zeit entfernt bzw. von einem Fachunternehmen entsorgt werden kann.

Das gereinigte Schmutzwasser fließt durch den Klarwasserablauf aus dem Sedimentationsbehälter heraus. Es versteht sich, dass der Reinheitsgrad des Klarwassers unter anderem von der Sedimentationszeit abhängt und nicht so verstanden werden kann, dass das abgeführte Klarwasser Trinkwasserqualität hat.

In einer Ausführungsform ist der horizontale Querschnitt des ersten Bereichs zwischen zwei- und achtmal, vorzugsweise zwischen vier- und sechsmal und besonders bevorzugt zwischen vier-und fünfmal so groß wie der des zweiten Bereichs. Durch den Größenunterschied sammelt sich mehr Schmutzwasser in dem ersten Bereich, sodass das durch den Schmutzwasserzulauf einströmende Schmutzwasser durch das bereits vorhandene Schmutzwasser abgebremst wird. Turbulenzen und Wirbel in der Schmutzwasserströmung werden daher bereits in dem ersten Bereich und vor Eintritt in den zweiten Bereich reduziert. Ein Teil der Schwebstoffe kann sich schon in dem ersten Bereich absetzen. Aufschwimmende Verunreinigungen können die Trennwand nicht passieren und von Zeit zu Zeit an der Oberfläche abgeschöpft bzw. von Fachunternehmen entsorgt werden. Der Sedimentationsbehälter kann rund, eckig und/oder oval sein.

Der Schmutzwasserzulauf kann, wie in einer weiteren Ausführungsform vorgesehen, eine in horizontale Richtung zeigende Öffnung aufweisen, sodass dass Schmutzwasser in horizontaler Richtung in den Sedimentationsbehälter einströmt, wobei die Öffnung vorzugsweise auf Höhe des Füllstandspegels angeordnet ist. Durch das horizontal einströmende Schmutzwasser findet zunächst nur in der Oberschicht eine Durchmischung des Schmutzwassers statt. Dabei versteht es sich, dass die Fallhöhe des einströmenden Schmutzwassers möglichst klein gehalten werden sollte. Beispielsweise kann das einströmende Schmutzwasser auch über eine sich flach oder leicht geneigte Rinne in den ersten Bereich geführt werden, wobei sich die Rinne vorzugsweise bis unter die Wasserlinie des bereits in dem ersten Bereich befindlichen Schmutzwasser erstreckt. Durch die zunächst auf eine obere Schicht begrenzte Durchmischung, nehmen Wirbel und Turbulenzen in dem Schmutzwasser des ersten Bereiches von oben nach unten ab. Ist die Öffnung des Schmutzwasserzulaufs gegenüber der Trennwand angeordnet, so trifft die Hauptströmung des einströmenden Schmutzwassers auf die Trennwand und wird so zusätzlich abgebremst.

In einer Ausführungsform weist die Trennwand einen Hauptabschnitt und zwei Flügelabschnitte auf, wobei jeder Flügelabschnitt mit dem Hauptabschnitt in einer Draufsicht von oben einen Winkel einschließt, der gemessen auf der Seite des ersten Bereichs 178° groß ist. Die Flügelabschnitte helfen das einströmende Schmutzwasser gleichmäßig in dem ersten Bereich zu verteilen.

In einer weiteren Ausführungsform ist der Neigungswinkel der Absetzplatten gegenüber der Schwerkraftrichtung zwischen 10° und 50°, vorzugsweise zwischen 20° und 45° und besonders bevorzugt 31° groß. Durch die Wahl des Neigungswinkels kann die auf der Absetzplatte sammelbare Menge an Sediment sowie die Abrutschgeschwindigkeit variiert werden.

Der zweite Bereich kann in einer Draufsicht von oben, wie in einer Ausführungsform vorgesehen, durch seitliche Begrenzungen, beispielsweise mit Begrenzungsblechen, auf die Breite der Absetzplatte begrenzt sein. Die seitliche Begrenzung gewährleistet, dass das Schmutzwasser ausschließlich von unten über die geneigte Absetzplatte in Richtung des Klarwasserablaufs fließen kann. Ein seitliches Einströmen, zwischen die Absetzplatten wird durch die seitliche Begrenzung verhindert.

In noch einer weiteren Ausführungsform ist zumindest eine weitere Absetzplatte, sind vorzugsweise mehrere weitere Absetzplatten, in dem zweiten Bereich vorgesehen, wobei die zumindest zwei Absetzplatten, vorzugsweise alle Absetzplatten, parallel zueinander angeordnet sind. Die Vielzahl der in dem zweiten Bereich angeordneten Absetzplatten erhöhen insgesamt die Sedimentationsstrecke und die Kontaktfläche, auf welcher die Schwebeteilchen auftreffen und nach unten abgleiten können, und führen so zu einem verbesserten Sedimentationsverhalten. Der Klärungsgrad des Schmutzwassers wird durch die parallel angeordneten Absetzplatten erhöht, da das zur Verfügung stehende Volumen des zweiten Bereiches besser genutzt und das durch den zweiten Bereich fließende Schmutzwasser weitestgehend gleichmäßig auf die Absetzplatten verteilt werden kann.

Die Trennwand kann in einer Ausführungsform in einer Draufsicht von oben abschnittsweise parallel zu zumindest einer Absetzplatte angeordnet sein. In einer Seitenansicht kann die Trennwand vertikal, d.h. parallel zur Schwerkraftrichtung angeordnet sein. Eine weitestgehend vertikale Ausrichtung der Trennwand in dem Sedimentationsbehälter verhindert, dass sich Schwebeteilchen und Festkörperpartikel auf der Trennwand ablagern. Eine aufwendige Reinigung der Trennwand kann so entfallen. Es versteht sich, dass sich auf Trennwänden die einen Neigungswinkel kleiner 10° gegenüber der Schwerkraftrichtung aufweisen ebenfalls keine oder allenfalls nur geringe Mengen an Sediment absetzen.

Ist zumindest eine Absetzplatte und/oder die Trennwand aus Metall, Kunststoff oder einem anorganischen Material, vorzugsweise faserverstärktem Beton gefertigt, wie in einer Ausführungsform vorgesehen, können das auf der Absetzplatte und/oder auf der Trennwand gesammelte Sediment besonders leichtgängig in Richtung Boden des Sedimentationsbehälters abgeführt werden. Eine glatte Oberfläche bzw. eine entsprechende Beschichtung der Absetzplatte und/oder der Trennwand sind hierbei von besonderem Vorteil.

In einer Ausführungsform ist die Trennwand und mindestens die erste Absetzplatte als austauschbare Module vorgesehen, so dass die Trennwand und mindestens die erste Absetzplatte durch einen Wartungszugang in bereits vorhandene Sedimentationsbehälter ein- und ausgebaut werden können. Beschädigte Trennwände oder Absetzplatten können so einzeln ausgetauscht werden. Durch die modulare Bauweise kann der Lamellenklärer in bereits vorhandene, unterirdische Becken eingebaut werden. Diese sind oftmals Schlammfänger nach DIN 1999 und besitzen überwiegend eine Revisionsöffnung nach DIN 4271. Derartige Revisionsöffnungen weisen überwiegend einen Durchmesser von 600 mm auf, sodass die modulare Bauweise das Ein- und Ausbauen über diese Revisionsöffnung erfolgen kann.

In einer Ausführungsform ist der Boden des Sedimentationsbehälters zumindest abschnittsweise in Richtung einer Sedimentsammelstelle geneigt. Die von der mindestens einen Absetzplatte in Richtung Boden des Sedimentationsbehälters geleiteten Sedimente können entlang dem geneigten Boden in Richtung der Sedimentsammelstelle rutschen, wo sie gesammelt und einfach aus dem Sedimentationsbehälter entfernt bzw. von einem Fachunternehmen entsorgt werden können. Die Sedimentsammelstelle kann beispielsweise eine Vertiefung im Boden des Sedimentationsbehälters sein, die vorzugsweise unterhalb dem zweiten Bereich angeordnet ist. Für das Entfernen des gesammelten Sediments kann eine Sedimententnahmevorrichtung, wie beispielsweise eine Förderschnecke oder eine Schlammpumpe, vorgesehen sein.

In einer Ausführungsform ist der Lamellenklärer in eine Fahrzeugwaschanlage, vorzugsweise eine Autowaschanlage, integriert.

Vorgesehen ist auch eine Schmutzwasseraufbereitungsanlage, welche einen erfindungsgemäßen Lamellenklärer aufweist.

Weitere Vorteile, Merkmale und Anbindungsmöglichkeiten der vorliegenden Erfindung werden deutlich anhand der folgenden Beschreibung von bevorzugten Ausführungsformen und den dazugehörigen Figuren. Es zeigen:
- Figur 1: eine Draufsicht auf eine erfindungsgemäße Ausführungsform eines Lamellenklärers und
- Figur 2: eine Seitenansicht auf eine weitere Ausführungsform der vorliegenden Erfindung.

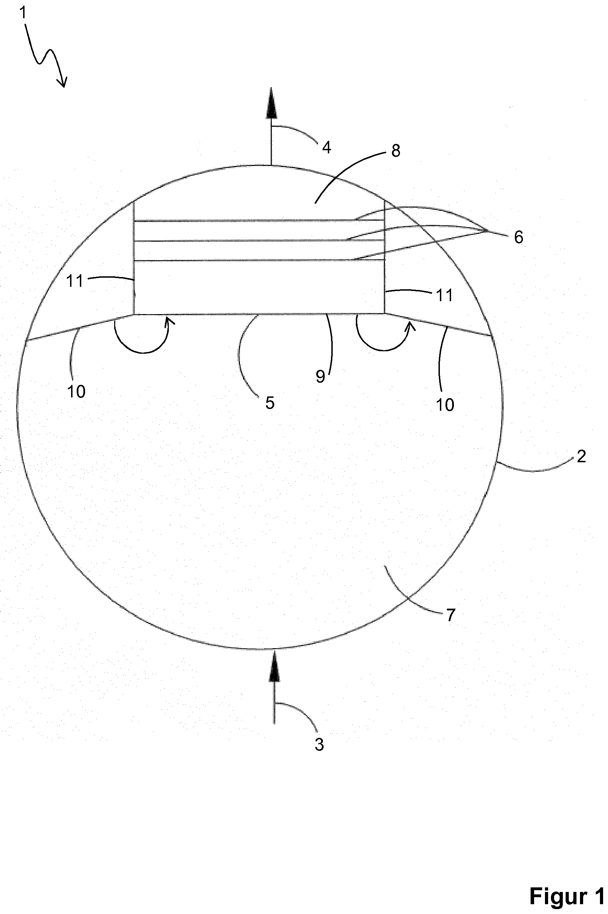

Der in Figur 1 dargestellte Lamellenklärer 1 hat einen Sedimentationsbehälter 2, der in einer Draufsicht von oben kreisförmig ausgestaltet ist. Auf diametral gegenüberliegenden Seiten weist der Sedimentationsbehälter 2 einen Schmutzwasserzulauf 3 und einen Klarwasserablauf 4 auf. In dem Sedimentationsbehälter 2 ist eine Trennwand 5 angeordnet, die den Innenraum des Sedimentationsbehälters 2 in einen ersten Bereich 7 und einen zweiten Bereich 8 unterteilt. Der Schmutzwasserzulauf 3 ist in dem ersten Bereich 7 und der Klarwasserablauf 4 ist in dem zweiten Bereich 8 angeordnet.

Die Trennwand 5 weist wie in der Figur 1 gut zu erkennen, zwei Flügelabschnitte 10 auf, die an einen Hauptabschnitt 9 der Trennwand 5 angrenzen. Jeder der Flügelabschnitte 10 schließt mit dem Hauptabschnitt 9 einen Winkel ein, der, gemessen auf der Seite des ersten Bereichs, 178° groß ist. Weiter ist der Hauptabschnitt 9 derart in dem Sedimentationsbehälter 2 angeordnet, dass die Hauptströmungsrichtung des durch den Schmutzwasserzulauf 3 einströmenden Schmutzwassers in Richtung des Hauptabschnittes 9 weist. Trifft die Hauptströmung des Schmutzwassers auf den Hauptabschnitt 9 der Trennwand 5, wird das Schmutzwasser abgebremst und in dem ersten Bereich 7 verteilt.

Der horizontale Querschnitt des ersten Bereichs 7 ist in einer Draufsicht von oben zwischen vier-und fünfmal so groß wie der des zweiten Bereichs 8, wobei der erste und zweite Bereich 7, 8 bodenseitig für den Durchtritt von Schmutzwasser miteinander verbunden sind. Der bodenseitige Durchtritt erstreckt sich dabei über die gesamte horizontale Länge der Trennwand. Durch die bodenseitige Verbindung fließt Schmutzwasser aus dem ersten Bereich 7 in den zweiten Bereich 8, in dem eine Mehrzahl von Absetzplatten 6 (drei davon sind schematisch eingezeichnet) parallel zueinander angeordnet sind. Weiter ist der zweite Bereich 8 durch seitliche Begrenzungsbleche 11 in einer Draufsicht von oben auf die Breite der Absetzplatten 6 begrenzt.

Das in dem zweiten Bereich 8 befindliche Schmutzwasser steigt entsprechend dem Füllstandspegel in dem Sedimentationsbehälter 2 an und wird über die geneigten Absetzplatten 6 in Richtung des Klarwasserablaufs 4 geführt. In dem Schmutzwasser befindliche Schwebeteilchen und Festkörperpartikel setzen sich auf den Absetzplatten 6 ab und rutschen schließlich auf diesen in Richtung dem Boden des Sedimentationsbehälters 2. Die Absetzplatten 6 erstrecken sich quer über quer den gesamten zweiten Bereich und haben eine positive Steigung in Richtung des Klarwasserablaufs 4. Alle Absetzplatten weisen einen Neigungswinkel gegenüber der Schwerkraftrichtung von 31° auf. Das durch den Klarwasserablauf 4 abfließende Wasser wird so weitestgehend von Schwebeteilchen und Festkörperpartikeln gereinigt.

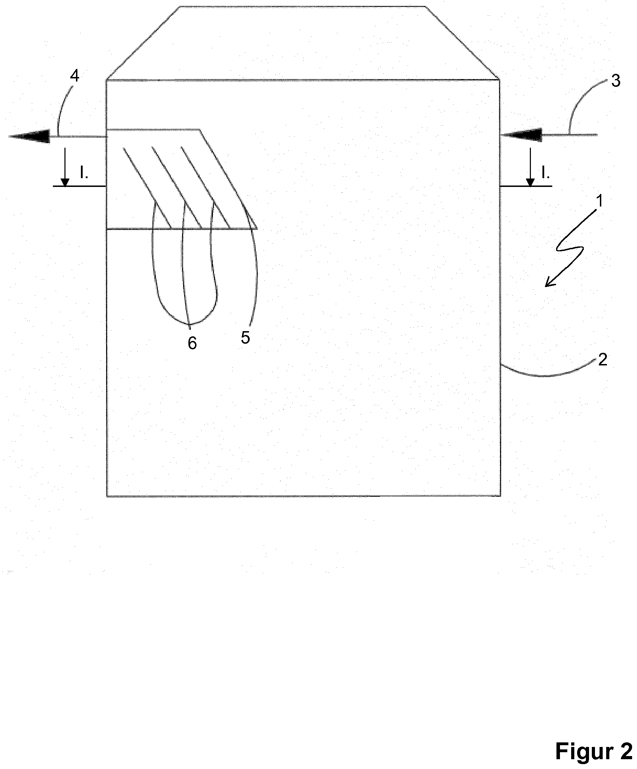

In Figur 2 ist eine weitere Ausführungsform eines erfindungsgemäßen Lamellenklärers 1 dargestellt, wobei der Querschnitt durch den Sedimentationsbehälter 2 entlang der Schnittlinie I-l dem in Figur 1 dargestellten Querschnitt entspricht. Der Sedimentationsbehälter 2 weist einen Schmutzwasserzulauf 3, einen Klarwasserablauf 4 sowie eine Trennwand 5 und eine Mehrzahl parallel zueinander angeordneter Absetzplatten 6 auf.

Der erste Bereich 7 und der zweite Bereich 8 sind bodenseitig für den Durchtritt von Schmutzwasser miteinander verbunden. Das durch den Schmutzwasserzulauf 3 einströmende Schmutzwasser kann so von dem ersten Bereich 7 in den zweiten Bereich 8 fließen.

Mit ansteigendem Füllstandspegel fließt das Schmutzwasser in dem zweiten Bereich 8 über die mit einer positiven Steigung in Richtung des Klarwasserablaufs 4 angeordneten Absetzplatten 6, wobei die Absetzplatten 6 gegenüber der Schwerkraftrichtung einen Neigungswinkel von 31° aufweisen. Auch die Trennwand 5 ist bei dieser Ausführungsform parallel zu den Absetzplatten 6 angeordnet und weist daher den gleichen Neigungswinkel auf wie die Absetzplatten 6. Schwebeteilchen und Festkörperpartikel setzen sich auf den Absetzplatten 6 ab und rutschen auf deren Oberfläche in Richtung Boden des Sedimentationsbehälters 2, wo sie sich sammeln und anschließend entfernt bzw. von einem Fachunternehmen entsorgt werden können.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmalen oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

### BEZUGSZEICHENLISTE

- 1: Lamellenklärer
- 2: Sedimentationsbehälter
- 3: Schmutzwasserzulauf
- 4: Klarwasserablauf
- 5: Trennwand
- 6: Absetzplatte
- 7: Erster Bereich
- 8: Zweiter Bereich
- 9: Hauptabschnitt
- 10: Flügelabschnitt
- 11: seitliche Begrenzung

## Patentansprüche

1. Lamellenklärer (1), welcher einen Sedimentationsbehälter (2), mit einem Schmutzwasserzulauf (3) und einem Klarwasserablauf (4), und mindestens eine erste Absetzplatte (6) aufweist, wobei eine Trennwand (5) in einer Draufsicht von oben derart in dem Sedimentationsbehälter (2) angeordnet ist, dass der Innenraum des Sedimentationsbehälters (2) in einen ersten, den Schmutzwasserzulauf (3) umfassenden Bereich (7) und einen zweiten, den Klarwasserablauf (4) und die Absetzplatte (6) aufweisenden Bereich (8) unterteilt ist, wobei der erste und zweite Bereich (7, 8) bodenseitig für den Durchtritt von Schmutzwasser miteinander verbunden sind und die Absetzplatte (6) sich quer durch den zweiten Bereich mit einer positiven Steigung in Richtung des Klarwasserablaufs (4) erstreckt, **dadurch gekennzeichnet, dass** die Trennwand (5) einen Hauptabschnitt (9) und zwei Flügelabschnitte (10) aufweist, wobei jeder Flügelabschnitt (10) mit dem Hauptabschnitt (9) in einer Draufsicht von oben einen Winkel einschließt, der gemessen auf der Seite des ersten Bereichs (7) kleiner 180° groß ist.

2. Lamellenklärer (1) nach Anspruch 1, **dadurch gekennzeichnet, dass** der horizontale Querschnitt des ersten Bereichs (7) zwischen zwei- und achtmal, vorzugsweise zwischen vier- und sechsmal und besonders bevorzugt zwischen vier- und fünfmal so groß wie der des zweiten Bereiches (8) ist.

3. Lamellenklärer (1) nach Anspruch 1 oder 2, **dadurch gekennzeichnet, dass** jeder Flügelabschnitt (10) mit dem Hauptabschnitt (9) in einer Draufsicht von oben einen Winkel einschließt, der gemessen auf der Seite des ersten Bereichs (7) 178° groß ist.

4. Lamellenklärer (1) nach einem der Ansprüche 1 bis 3, **dadurch gekennzeichnet, dass** der Neigungswinkel der Absetzplatten (6) gegenüber der Schwerkraftrichtung zwischen 10° und 50°, vorzugsweise zwischen 20° und 45° und besonders bevorzugt 31° groß ist.

5. Lamellenklärer (1) nach einem der Ansprüche 1 bis 4, **dadurch gekennzeichnet, dass** der zweite Bereich (8) durch seitliche Begrenzungen in einer Draufsicht von oben auf die Breite der Absetzplatte (6) begrenzt ist.

6. Lamellenklärer (1) nach einem der Ansprüche 1 bis 5, **dadurch gekennzeichnet, dass** zumindest eine weitere Absetzplatte (6), vorzugsweise mehrere weitere Absetzplatten (6), in dem zweiten Bereich (9) vorgesehen sind, wobei die zumindest zwei Absetzplatten (6), vorzugsweise alle Absetzplatten (6), parallel zueinander angeordnet sind.

7. Lamellenklärer (1) nach einem der Ansprüche 1 bis 6, **dadurch gekennzeichnet, dass** die Trennwand (5) und zumindest eine Absetzplatte (6) abschnittsweise parallel zueinander angeordnet sind.

8. Lamellenklärer (1) nach einem der Ansprüche 1 bis 7, **dadurch gekennzeichnet, dass** zumindest eine Absetzplatte (6) und/oder die Trennwand (5) aus Metall, Kunststoff oder einem anorganischen Material, vorzugsweise faserverstärktem Beton gefertigt ist.

9. Lamellenklärer (1) nach einem der Ansprüche 1 bis 8, **dadurch gekennzeichnet, dass** die Trennwand (5) und mindestens die erste Absetzplatte (6) als austauschbare Module vorgesehen sind.

10. Lamellenklärer (1) nach Anspruch einem der Ansprüche 8 bis 9, **dadurch gekennzeichnet, dass** der Sedimentationsbehälter (2) einen in Richtung einer Sedimentsammelstelle geneigten Boden aufweist.

11. Lamellenklärer (1) nach Anspruch 10, **dadurch gekennzeichnet, dass** die Sedimentsammelstelle unterhalb des zweiten Bereiches angeordnet ist und eine Sedimententnahmevorrichtung aufweist.

12. Lamellenklärer (1) nach einem der Ansprüche 1 bis 11, **dadurch gekennzeichnet, dass** sie in eine Fahrzeugwaschanlage, vorzugsweise eine Autowaschanlage, integriert ist.

13. Schmutzwasseraufbereitungsanlage, welche einen Lamellenklärer (1) nach einem der vorangehenden Ansprüche aufweist.

## Claims

1. A lamella clarifier (1) having a sedimentation container (2) with a waste water feed (3) and a clear water discharge (4), and at least one first settling plate (6), wherein a separating wall (5) in a plan view from above is so arranged in the sedimentation container (2) that the interior of the sedimentation container (2) is subdivided into a first region (7) including the waste water feed (3) and a second region (8) having the clear water discharge (4) and the settling plate (6), wherein the first and second regions (7, 8) are connected to each other at the bottom for waste water to pass therethrough and the settling plate (6) extends transversely through the second region with a positive inclination in the direction of the clear water discharge (4), **characterised in that** the separating wall (5) has a main portion (9) and two wing portions (10), wherein each wing portion (10) includes with the main portion (9) in a plan view from the top an angle which, when measured on the side of the first region (7), is less than 180°.

2. A lamella clarifier (1) as set forth in claim 1 **characterised in that** the horizontal cross-section of the first region (7) is between two and eight times, preferably between four and six times and particularly preferably between four and five times as large as that of the second region (8).

3. A lamella clarifier (1) as set forth in claim 1 or claim 2 **characterised in that** each wing portion (10) includes with the main portion (9) in a plan view from the top an angle, which measured on the side of the first region (7), is 178°.

4. A lamella clarifier (1) as set forth in claim 1 through 3 **characterised in that** the angle of inclination of the settling plate (6) with respect to the direction of the force of gravity is between 10° and 50°, preferably between 20° and 45° and particularly preferably 31°.

5. A lamella clarifier (1) as set forth in one of claims 1 through 4 **characterised in that** in a plan view from the top the second region (8) is limited by lateral boundaries to the width of the settling plate (6).

6. A lamella clarifier (1) as set forth in one of claims 1 through 5 **characterised in that** at least one further settling plate (6), preferably a plurality of further settling plates (6), are provided in the second region (9), wherein the at least two settling plates (6) and preferably all settling plates (6) are arranged in mutually parallel relationship.

7. A lamella clarifier (1) as set forth in one of claims 1 through 6 **characterised in that** the separating wall (5) and at least one settling plate (6) are arranged section-wise in mutually parallel relationship.

8. A lamella clarifier (1) as set forth in one of claims 1 through 7 **characterised in that** at least one settling plate (6) and/or the separating wall (5) is made from metal, plastic or an inorganic material, preferably fiber-reinforced concrete.

9. A lamella clarifier (1) as set forth in one of claims 1 through 8 **characterised in that** the separating wall (5) and at least the first settling plate (6) are provided as interchangeable modules.

10. A lamella clarifier (1) as set forth in one of claims 8 to 9 **characterised in that** the sedimentation container (2) has a bottom inclined in the direction of a sediment collection location.

11. A lamella clarifier (1) as set forth in claim 10 **characterised in that** the sediment collection location is arranged beneath the second region and has a sediment removal device.

12. A lamella clarifier (1) as set forth in one of claims 1 through 11 **characterised in that** it is integrated in a vehicle wash installation, preferably a car wash installation.

13. A waste water treatment installation having a lamella clarifier (1) as set forth in one of the preceding claims.

## Revendications

1. Clarificateur à tôles inclinées (1) qui comprend un bac de sédimentation (2) avec une arrivée d'eaux usées (3) et une sortie d'eau claire (4), et au moins une plaque de sédimentation (6), une paroi de séparation (5) étant disposée, en une vue de dessus, dans le bac de sédimentation (2) de façon telle que l'espace intérieur du bac de sédimentation (2) est divisé en une première zone (7) comprenant l'arrivée d'eaux usées (3) et une deuxième zone (8) comprenant la sortie d'eau claire (4) et la plaque de sédimentation (6), la première et la deuxième zone (7, 8) étant reliées l'une à l'autre au niveau du fond pour le passage d'eaux usées et la plaque de sédimentation (6) s'étendant transversalement à travers la deuxième zone avec une inclinaison positive en direction de la sortie d'eau claire (4), **caractérisé en ce que** la paroi de séparation (5) comprend une partie principale (9) et deux parties latérales (10), chaque partie latérale (10) enfermant avec la partie principale (9), en une vue de dessus, un angle qui est inférieur à 180°, mesuré du côté de la première zone (7).

2. Clarificateur à tôles inclinées (1) selon la revendication 1, **caractérisé en ce que** la section transversale horizontale de la première zone (7) est entre deux et huit fois, de préférence entre quatre et six fois et de façon particulièrement préférée entre quatre et cinq fois plus grande que celle de la deuxième zone (8).

3. Clarificateur à tôles inclinées (1) selon la revendication 1 ou 2, **caractérisé en ce que** chaque partie latérale (10) enferme avec la partie principale (9), en une vue de dessus, un angle de 178°, mesuré du côté de la première zone (7).

4. Clarificateur à tôles inclinées (1) selon l'une des revendications 1 à 3, **caractérisé en ce que** l'angle d'inclinaison de la plaque de sédimentation (6) est, par rapport à la direction de gravité, entre 10° et 50°, de préférence entre 20° et 45° et de façon particulièrement préférée de 31°.

5. Clarificateur à tôles inclinées (1) selon l'une des revendications 1 à 4, **caractérisé en ce que** la deuxième zone (8) et limitée par des limitations latérales, en une vue de dessus.

6. Clarificateur à tôles inclinées (1) selon l'une des revendications 1 à 5, **caractérisé en ce qu'**il est prévu, dans la deuxième zone (8), une plaque de sédimentation (6) supplémentaire, de préférence plusieurs plaques de sédimentation (6) supplémentaires, lesdites au moins deux plaques de sédimentation (6), de préférence toutes les plaques de sédimentation (6), étant disposées parallèlement l'une à l'autre ou les unes aux autres.

7. Clarificateur à tôles inclinées (1) selon l'une des revendications 1 à 6, **caractérisé en ce que** la paroi de séparation (5) et au moins une plaque de sédimentation (6) sont disposées, par zone, parallèlement l'une à l'autre.

8. Clarificateur à tôles inclinées (1) selon l'une des revendications 1 à 7, **caractérisé en ce qu'**au moins une plaque de sédimentation (6) et/ou la paroi de séparation (5) est (ou sont) réalisée(s) en métal, matière synthétique ou un matériau inorganique, de préférence du béton renforcé de fibres.

9. Clarificateur à tôles inclinées (1) selon l'une des revendications 1 à 8, **caractérisé en ce que** la paroi de séparation (5) et au moins la première plaque de sédimentation (6) sont prévues comme des modules échangeables.

10. Clarificateur à tôles inclinées (1) selon l'une des revendications 8 à 9, **caractérisé en ce que** le bac de sédimentation (2) comprend un fond incliné vers un emplacement de collecte de sédiments.

11. Clarificateur à tôles inclinées (1) selon la revendication 10, **caractérisé en ce que** l'emplacement de collecte de sédiments est disposé en-dessous de la deuxième zone et comprend un dispositif de prélèvement de sédiments.

12. Clarificateur à tôles inclinées (1) selon l'une des revendications 1 à 11, **caractérisé en ce qu'**il est intégré dans une installation de lavage de véhicule, de préférence une station de lavage de voiture.

13. Installation de traitement d'eaux usées qui comprend un clarificateur à tôles inclinées (1) selon l'une des revendications précédentes.
